# FASCICULE DE BREVET EUROPEEN

(11) **EP 2 189 355 B1**
(45) Date de publication et mention de la délivrance du brevet: **13.04.2016**
(21) Numéro de dépôt: 09176809.3
(22) Date de dépôt: 23.11.2009
(51) Int. Cl.: B62B 9/20, B62B 7/08

(54) **Châssis pliant de poussette pour enfant, et poussette correspondante**
Kinderwagengestell zum Zusammenklappen und entsprechender Kinderwagen
Folding frame of a child's pushchair and corresponding pushchair

(30) Priorité: 24.11.2008 FR 0857949
(43) Date de publication de la demande: 26.05.2010
(73) Titulaire: Dorel France, 49309 Cholet Cedex (FR)
(72) Inventeur: Ageneau, Laurent, 85290 Saint Laurent sur Sevre (FR); Lelaure, Xavier, 85290 Mortagne sur Sevre (FR)
(74) Mandataire: Vidon Brevets & Stratégie

(56) Documents cités:
- EP-A- 1 466 810
- EP-A- 1 967 440
- EP-A1- 1 564 106
- FR-A- 2 850 072

## Description

### 1. Domaine de l'invention

Le domaine de l'invention est celui de la puériculture. Plus précisément, l'invention concerne les poussettes, ou voitures d'enfant, et en particulier les mécanismes de pliage pour le châssis de telles poussettes.

### 2. L'art antérieur

On connaît déjà de très nombreuses techniques de pliage de châssis de poussette. D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations avec un nombre réduit d'opérations, et chacune de ces opérations devant être le plus facile possible ;
- sécurité de l'enfant transporté et notamment contrôle du pliage (pour lutter contre un pliage non souhaité, en particulier en présence d'un enfant) ;
- simplicité et faible coût de la fabrication.

Il est en outre nécessaire, bien sûr, qu'en position dépliée, la poussette soit confortable et sûre pour l'enfant.

On connaît par exemple les poussettes à pliage canne consistant à plier vers l'avant les poussoirs sur le brancard avant de la poussette. Ces poussettes ont notamment l'inconvénient de présenter un certain encombrement en longueur une fois pliées.

On connaît également les poussettes dites à pliage parapluie (du fait qu'elles s'inspirent du principe des baleines d'un parapluie), dont le principe est par exemple présenté dans le document de brevet US-3 936 069. Cette poussette comprend une poutre principale sensiblement verticale dont l'extrémité supérieure est solidaire d'un guidon et l'extrémité inférieure porte un élément d'articulation, sur lequel sont articulés des piétements. Le pliage des piétements s'effectue en appuyant sur le guidon, ce qui a pour effet d'entraîner la poutre principale et l'élément d'articulation vers le bas. Les piètements se rapprochent alors de la poutre principale par la présence de biellettes reliant d'un côté les piètements et de l'autre l'élément d'articulation. Le déploiement des piétements est obtenu par la manipulation inverse. Les inconvénients de ces pliages de type parapluie sont notamment un encombrement restant important en position pliée, et un déplacement peu aisé, toujours en position pliée, du fait que les roues ne sont plus parallèles.

On connaît encore les poussettes combinant les pliages canne et parapluie, dont le principe est notamment présenté dans le document de brevet EP-1 466 810. Cette poussette comprend deux poussoirs équipés de poignées articulés chacun sur un brancard avant, ou montant supérieur, relié à un bloc de roues avant. Elle comprend également deux montants inférieurs, s'étendant depuis le blocs de roues avant respectivement vers l'un de deux blocs de roues arrière. Les montants inférieurs et supérieurs définissent ainsi sensiblement deux « V », inférieur et supérieur, dont les pointes correspondent à une zone d'articulation voisine du bloc de roues avant. Un mécanisme de pliage/dépliage comprend dans un mode de réalisation un noeud central d'articulation sur lequel sont montées articulées quatre biellettes, reliées chacune à un montant, ainsi qu'une cinquième biellette sur laquelle peut coulisser le noeud central d'articulation. Un tel mécanisme assure un pliage et un dépliage de type parapluie (l'axe du « parapluie » étant horizontal).

Cette approche est cependant uniquement adaptée à une poussette à trois roues (ou trois blocs de roues),.

Un autre inconvénient réside dans le fait que le pliage reste complexe, car il se fait en deux temps et nécessite en conséquence plusieurs manipulations successives, à savoir une première étape de pliage des poussoirs, par basculement sur les montants supérieurs, et une deuxième étape de déplacement du noeud central permettant le rapprochement ou rassemblement des quatre montants.

Un inconvénient supplémentaire est dû à la présence de structures sensiblement en « V » qui entraînent, lors du pliage, le décalage des roues arrière qui, une fois la poussette pliée, ne sont plus parallèles mais légèrement décalées vers l'intérieur. Une telle inclinaison des roues engendre des problèmes de stabilité et de roulage, lorsque l'utilisateur souhaite déplacer la poussette en position pliée.

En outre, la poussette pliée ne peut pas être maintenue dans une position « debout », et l'utilisateur doit se pencher pour la relever et la déplacer.

### 3. Objectifs de l'invention

L'invention a notamment pour objectif de pallier ces inconvénients de l'art antérieur.

Plus précisément, un objectif de l'invention est, selon au moins un mode de réalisation, de fournir un châssis de poussette dont le pliage est efficace, en termes de compacité et de simplicité d'utilisation, et adapté pour une poussette à quatre roues.

Ainsi, un objectif de l'invention est de fournir, selon au moins un mode de réalisation, un châssis de poussette qui offre une bonne compacité en position pliée, permettant notamment un transport et un rangement aisés.

Encore un autre objectif de l'invention est, selon au moins un mode de réalisation, de fournir un châssis de poussette assurant un pliage et/ou un dépliage simples, rapides, ergonomiques, et qui réduisent et simplifient les manipulations nécessaires (tout en assurant la sécurité de l'enfant transporté).

L'invention a également pour objectif, selon au moins un mode de réalisation, de fournir un châssis de poussette qui facilite les manipulations et les déplacements, lorsque la poussette est pliée.

### 4. Caractéristiques essentielles de l'invention

Ces objectifs, ainsi que d'autres qui apparaîtront plus clairement par la suite, sont atteints à l'aide d'un châssis pliant de poussette pour enfant, tel revendiquée dans la revendication 1.

Ainsi, l'invention est adaptée aux châssis à quatre roues (ainsi qu'à des configurations à trois roues). On entend ici par « roue » aussi bien une roue unique qu'un bloc de deux roues montées sur un même axe.

Le châssis présente deux parallélogrammes, un parallélogramme inférieur (ou base de roulage) et un parallélogramme supérieur (ou cadre d'assise). Ces deux parallélogrammes ont en commun une traverse pouvant adopter une position sensiblement rectiligne quand la poussette est dépliée, et une position cassée ou non rectiligne quand la poussette est pliée.

La technique de l'invention met en oeuvre en outre un support pilote reliant le noeud central d'articulation à la traverse, et donc indirectement aux deux parallélogrammes. Le support pilote contrôle, lors du pliage, la cassure de la traverse, et donc la déformation des parallélogrammes, qui a pour conséquence le rapprochement des portions latérales droite et gauche du châssis. Une fois la poussette pliée, au moins les roues arrière sont sensiblement parallèles entre elles, et non plus décalées comme dans l'art antérieur.

Selon l'invention, et contrairement à la technique du document EP-1 466 810, le noeud central d'articulation ne coulisse pas le long du support. Il est au contraire fixe par rapport à celui-ci (c'est-à-dire que la position du noeud central par rapport au support pilote, généralement à une extrémité de celui-ci, est invariante), et c'est donc le déplacement du support qui pilote réellement le pliage de la poussette.

La technique de pliage de type parallélogramme de l'invention est donc tout à fait différente de la technique à base de deux « V » du document EP-1 466 810.

Il est noté que, dans la présente description, on appelle « extrémité avant » d'un montant (supérieur ou inférieur) l'extrémité orientée vers l'avant, par rapport au sens de déplacement de la poussette, et « extrémité arrière » l'extrémité orientée vers l'arrière.

Selon un mode de réalisation particulier, le châssis comprend des moyens de contrôle du pliage et/ou du dépliage, solidaires desdits poussoirs, agissant indirectement sur ledit support pilote, au moins pour amorcer le pliage et/ou le dépliage dudit châssis.

Selon un aspect particulier de l'invention, les montants supérieurs sont articulés par rapport aux poussoirs, et les moyens de contrôle comprennent au moins une bielle, dite de synchronisation, entraînant le noeud central vers l'arrière de la poussette lorsque les poussoirs sont basculés vers l'avant.

Ainsi, le pliage de la poussette combine et synchronise un pliage des poussoirs par rapport aux montants supérieurs et un pliage des montants supérieurs par rapport aux montants inférieurs avec un pliage de type parallélogramme entraînant le rapprochement des portions latérales droite et gauche du châssis.

Ce pliage ne s'effectue donc pas, selon ce mode de réalisation, en plusieurs étapes, comme cela est le cas dans les poussettes connues de ce type, mais de manière fluide en une seule manoeuvre.

Outre quatre biellettes solidarisant un noeud central d'articulation aux montants inférieurs et aux montants supérieurs, la poussette comprend donc avantageusement des éléments supplémentaires de synchronisation de la cinématique (par exemple deux bielles supplémentaires). Ainsi, l'utilisateur peut, tout en restant debout, effectuer le pliage complet de la poussette en une seule manoeuvre.

La cinématique de pliage de l'invention peut permettre également, selon ce mode de réalisation, de plier la poussette en position verticale. Pour ce faire, lorsque l'utilisateur amorce le pliage de la poussette en cassant les poussoirs vers les montants supérieurs, il retient la poussette au niveau des poignées et la poussette se replie alors en position verticale.

La cinématique de pliage de ce mode de réalisation de l'invention permet en outre d'obtenir une fluidité du pliage grâce à la synchronisation des deux mouvements, une compacité de pliage dans les trois directions et un pliage ergonomique en posture debout.

Selon l'invention, la traverse formant compas comprend deux portions de traverse gauche et droite, chacune desdites portions de traverse présentant une première extrémité couplée de façon pivotante à une extrémité avant dudit support pilote et une seconde extrémité est couplée de façon pivotante à l'extrémité avant d'un desdits montants inférieurs et/ou d'un desdits montants supérieurs, lesdites portions de traverse étant aptes à se plier vers l'arrière de la poussette lors du pliage dudit châssis.

Ainsi, le pliage de la poussette s'effectue de manière compacte, simple et fluide, en minimisant les manipulations nécessaires.

Selon un autre aspect avantageux de l'invention, le châssis comprend des moyens de verrouillage du châssis en position dépliée, qui sont préférentiellement activés automatiquement lorsque le dépliage est achevé.

Ainsi, une fois le dépliage effectué, le verrouillage du châssis s'effectue de manière naturelle. On peut également envisager un verrouillage du châssis en position pliée, notamment pour faciliter son transport.

Selon un autre aspect avantageux de l'invention, le châssis comprend des moyens de commande, ou de libération, desdits moyens de verrouillage, montés sur lesdits poussoirs ou sur des poignées de guidage reliées auxdits poussoirs ou sur un compas reliant lesdits poussoirs.

Ainsi, l'utilisateur peut, tout en restant debout, effectuer le pliage, une fois la ou les commandes de libération du verrouillage actionnées, en une seule manoeuvre.

Selon un mode de réalisation particulier de l'invention, le châssis comprend des moyens de traction de ladite poussette en position pliée, reliés audit noeud ou au support pilote ou à la traverse ou au compas.

Selon un aspect préférentiel de l'invention, lesdits moyens de traction comprennent une poignée montée sur une tige au moins partiellement escamotable parallèlement audit et/ou dans ledit support pilote.

L'utilisateur peut ainsi déployer une poignée de traction pour tirer la poussette pliée. Ceci permet de déplacer aisément le châssis, ou la poussette, en position pliée.

Selon un autre aspect avantageux de l'invention, le châssis comprend au moins une pédale permettant de redresser ladite poussette une fois celle-ci en position pliée.

Cette pédale permet à l'utilisateur de redresser la poussette pliée à l'aide du pied, sans se pencher.

Selon un autre aspect avantageux de l'invention, ladite pédale comprend ou coopère avec des moyens de stabilisation de la poussette une fois celle-ci en position pliée et redressée.

Les extrémités des poussoirs peuvent ainsi jouer le rôle de moyens de stabilisation.

Selon encore un autre aspect avantageux de l'invention, le châssis comprend deux pédales, formées dans ou montées sur les articulations reliant respectivement un desdits montants supérieurs et un desdits poussoirs.

Avantageusement, l'extrémité avant de chacun desdits montants inférieurs est reliée à au moins une roue ou un bloc de roues avant

Enfin, l'invention concerne une poussette pour enfant comprenant un châssis pliant comme décrit précédemment et équipée d'au moins un dispositif de transport d'enfant monté sur ledit châssis, tel qu'un hamac.

### 5. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 illustre, en perspective, une poussette selon l'invention, en position dépliée ;
- les figures 2A à 2G illustrent le mécanisme de pliage de la poussette de la figure 1 ;
- la figure 2H illustre la poussette pliée en position verticale ;
- la figure 3 illustre de façon plus détaillée le support pilote et le noeud d'articulation de la poussette selon l'invention ;
- la figure 4 est une vue partielle de dessus de la poussette ;
- la figure 5 est une vue de dessous de la poussette ;
- la figure 6 est une vue de côté de la poussette pliée à plat ;
- la figure 7 est une vue de côté de la poussette pliée en position relevée ;
- la figure 8A est une vue de côté de la poussette pliée en position relevée, la poignée de traction étant déployée ;
- la figure 8B est une vue partielle en perspective de la poussette pliée à plat ;
- la figure 8C est une vue partielle de la poussette pliée en position relevée ;
- la figure 9 est une vue de côté de la poussette pliée lorsqu'elle est déplacée, en utilisant la poignée de traction déployée ;
- la figure 10 est une vue en perspective de la poussette pliée en position relevée ;
- la figure 11 est une vue en perspective de la poussette pliée en position relevée, la poignée de traction étant déployée ;
- la figure 12 est une vue de dessous de la poussette pliée ;
- la figure 13 est une vue de dessus de la poussette pliée ;
- la figure 14 est une vue de côté de la poussette pliée en position relevée, la poignée de portage étant déployée ;
- la figure 15 est une vue de côté de la poussette pliée en position relevée, la poignée de traction étant déployée.

### 6. Description d'un mode de réalisation de l'invention

L'invention concerne donc de nouveaux châssis de poussettes présentant une nouvelle cinématique de pliage. Ces châssis peuvent notamment être des châssis de poussette à quatre roues ou blocs de roues.

L'invention concerne également, bien sûr, les poussettes mettant en oeuvre un tel châssis, et équipées d'un dispositif de transport d'enfant, tel qu'un hamac, amovible ou non. Pour faciliter la compréhension de l'invention, on décrit ci-après le châssis de poussette nu. L'homme du métier saura aisément équiper de façon classique un tel châssis d'un hamac ou un élément similaire, qu'il soit amovible (par exemple à l'aide d'éléments de liaison connus sous la marque « Moduloclip » développés par la Demanderesse), ou fixe, rigide ou souple, réglable au niveau du dossier et/ou de l'assise,...

Pour répondre aux problèmes de l'art antérieur mentionnés ci-dessus, et notamment à celui de la conservation du parallélisme des roues suite au pliage, l'invention propose une cinématique se basant sur le principe de deux parallélogrammes déformables contrôlant le rapprochement des portions latérales droite et gauche, par déformation desdits parallélogrammes, qui permet de conserver sensiblement le parallélisme des roues.

En outre, dans un mode de réalisation de l'invention, le pliage de la poussette combine et synchronise le pliage des poussoirs par rapport aux montants supérieurs et le rapprochement des portions latérales droite et gauche. Dans le mode de réalisation décrit par la suite, ce pliage des poussoirs sur les montants supérieurs est une cassure des poussoirs qui sont ramenés vers l'avant. Il pourrait également s'agir d'un coulissement du poussoir par rapport aux montants supérieurs. Ce pliage ne s'effectue pas en plusieurs étapes, comme cela est le cas dans les poussettes connues de ce type.

Des bielles de synchronisation permettent d'obtenir la synchronisation des deux mouvements, à savoir le pliage de la traverse (entraînant le pliage de la base roulante formée des montants inférieurs et de la traverse, ainsi que du cadre d'assise formé des montants supérieurs et de la traverse) simultanément avec le déplacement des poussoirs vers l'avant, ces deux actions étant indépendantes dans l'art antérieur.

Ainsi, l'utilisateur peut, tout en restant debout, effectuer le pliage en une seule manoeuvre.

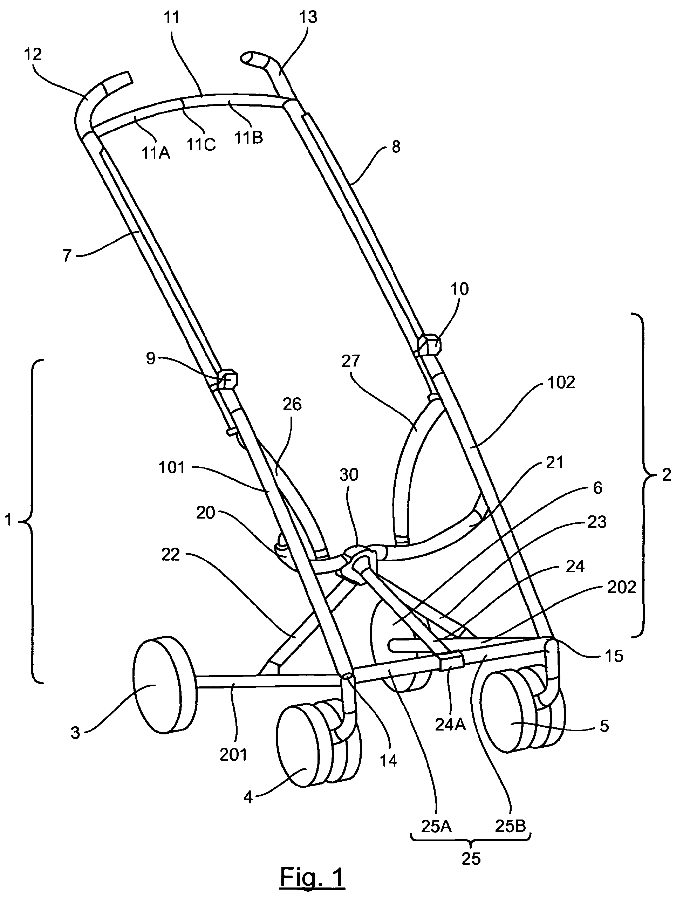

Le mode de réalisation décrit à titre d'exemple, et illustré par les figures 1 à 5, concerne un châssis pliant de voiture d'enfant à quatre roues sur lequel peut être monté un hamac notamment qui, pour des raisons de clarté, n'est pas illustré.

Dans le mode de réalisation illustré, un châssis pliant de voiture d'enfant comprend une portion latérale de châssis droite 1 et une portion latérale de châssis gauche 2, présentant chacune un montant (bras) supérieur 101, 102 et un montant (bras) inférieur 201, 202. Les extrémités des montants inférieurs 201, 202 portent chacune un bloc de roue(s) 3, 4, 5, 6. Chaque bloc porte par exemple une ou deux roues.

La voiture d'enfant comprend en outre des poussoirs droit et gauche 7, 8 sensiblement parallèles qui, lorsque la poussette est dépliée, sont placés respectivement dans le prolongement des montants supérieurs 101, 102 auxquels ils sont solidarisés de façon rotative par des articulations droite et gauche 9, 10. Les poussoirs 7, 8 sont reliés sur leur partie supérieure par un compas 11 et coopèrent avec des poignées de guidage 12, 13 à leur extrémité supérieure. Plus précisément, le compas 11 comprend deux poutres articulées 11 A, 11 B l'une à l'autre à une extrémité par un élément d'articulation 11C et reliées aux poussoirs 7, 8 à l'autre extrémité de façon pivotante.

Les montants supérieurs 101, 102 sont articulés par rapport aux montants inférieurs 201, 202 à l'aide d'articulations 14, 15 qui permettent le pivotement des montants supérieurs 101, 102 en direction des montants inférieurs 201, 202 lorsque la voiture d'enfant est pliée, et inversement.

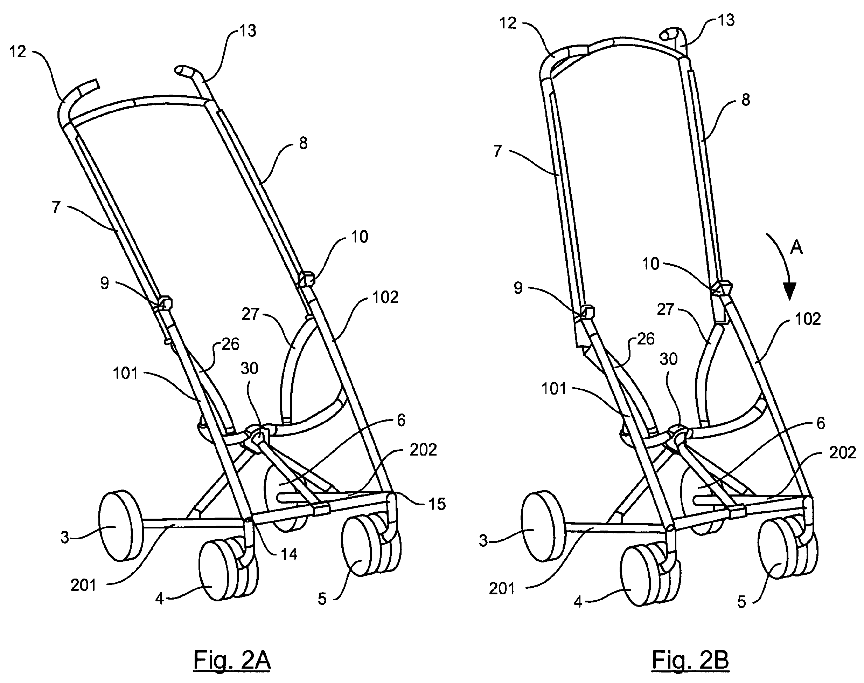

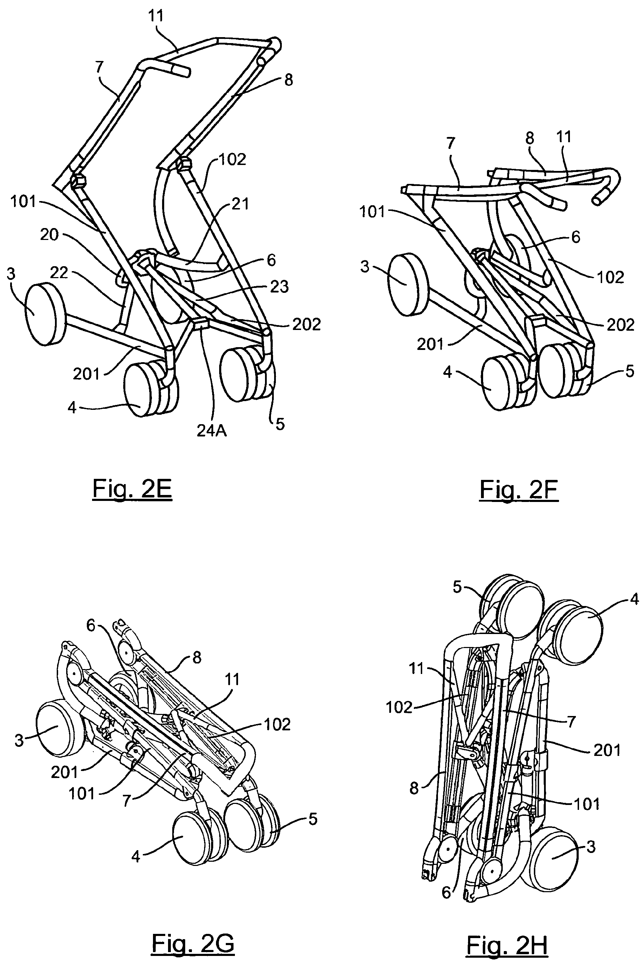

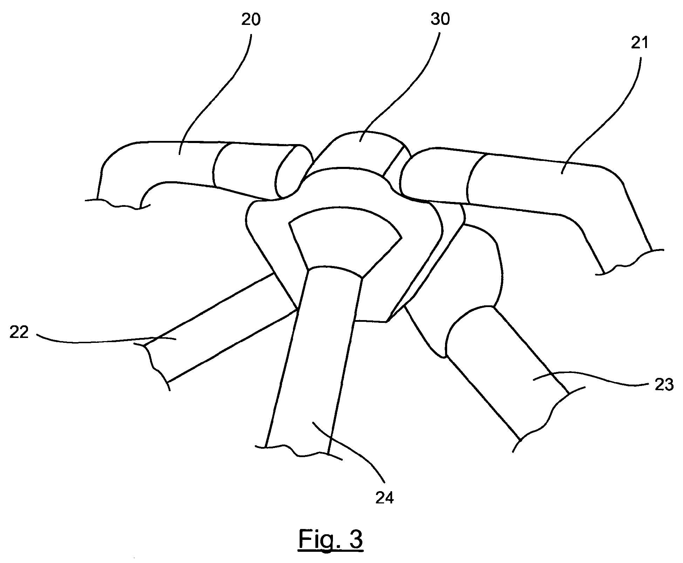

Les montants 101, 102, 201, 202 des deux portions latérales de châssis 1, 2 sont prévus pour être solidarisés, sensiblement à mi-longueur, à des biellettes 20, 21 (de forme incurvée dans ce mode de réalisation) et 22, 23 (de forme sensiblement rectiligne dans ce mode de réalisation) respectives. Ces dernières guident les montants 101, 102, 201, 202, depuis une position dépliée (figure 2A) vers une position pliée (figure 2G), et inversement. Les biellettes 20, 21, 22, 23 sont montées mobiles en rotation par rapport à un noeud central d'articulation 30 qui est représenté plus en détail sur la figure 3.

Selon l'invention, la poussette comprend également un support pilote 24 (de forme sensiblement rectiligne) reliant le noeud central d'articulation 30 à une traverse 25 formant compas qui relie les extrémités avant des montants inférieurs droite et gauche 201, 202 et/ou des montants supérieurs 101, 102 des portions de châssis 1, 2. Plus précisément, la traverse 25 comprend deux portions de traverse droite et gauche 25A, 25B articulées l'une à l'autre à une extrémité avant du support pilote 24 (par un élément d'articulation 24A), et reliées à l'autre extrémité aux montants inférieurs 201, 202 et/ou aux montants supérieurs 101, 102 de façon pivotante par le biais des articulations 14, 15.

Il est à noter que la traverse 25 constitue un élément du châssis de la poussette et peut, à l'occasion, servir de marchepied.

Il est également à noter que le noeud central d'articulation 30 et le support pilote 24 peuvent être formés d'un seul tenant ou séparément.

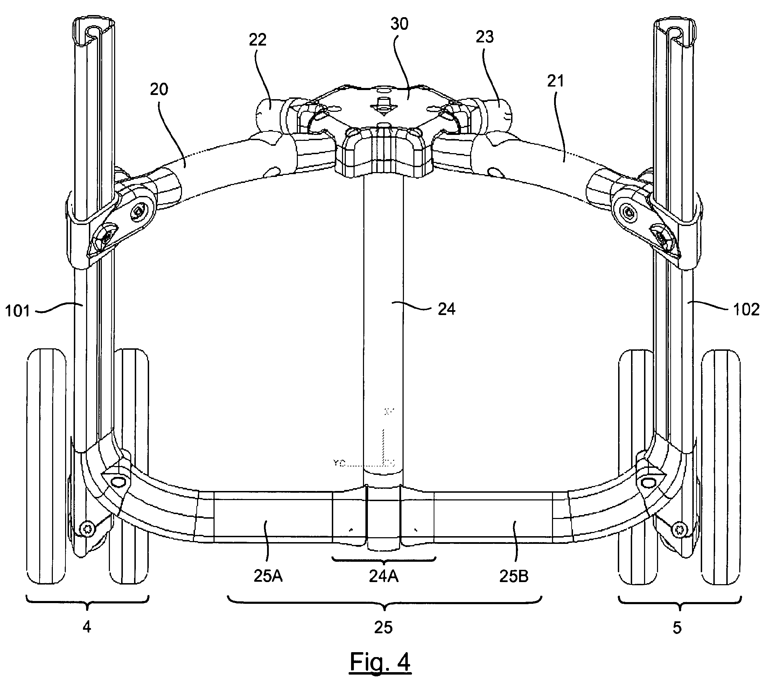

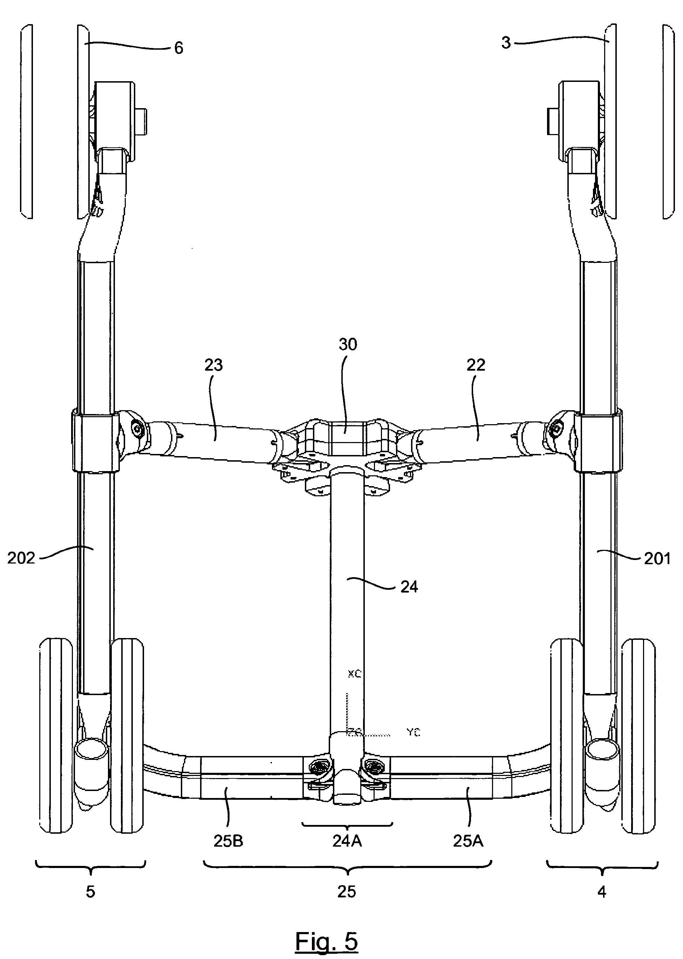

Les figures 4 et 5 sont des vues partielles de dessus et de dessous respectivement de la poussette qui mettent mieux en évidence les deux parallélogrammes déformables, un parallélogramme inférieur (ou base de roulage) comprenant les éléments 201, 25, 202, 23 et 22 et un parallélogramme supérieur (ou cadre d'assise) comprenant les éléments 101, 25, 102, 21 et 20. Ces deux parallélogrammes ont en commun la traverse 25, et leur déformation, lors du pliage ou du dépliage, est pilotée par le support pilote 24. Sur les figures 4 et 5, chaque parallélogramme déformable peut être défini, lui-même, par deux parallélogrammes ayant en commun le support pilote 24. Ainsi, le parallélogramme inférieur peut être défini par un premier parallélogramme comprenant les éléments 201, 25A, 24, 22 et un deuxième parallélogramme 202, 23, 24, 25B. Le parallélogramme supérieur peut être défini par un troisième parallélogramme comprenant les éléments 101, 25A, 24, 20 et un quatrième parallélogramme 102, 21, 24, 25B.

Selon ce mode de réalisation de l'invention, la poussette comprend encore des bielles de « synchronisation » 26, 27 qui présentent une forme incurvée dans la mise en oeuvre illustrée. Ces bielles 26, 27 sont reliées aux poussoirs 7, 8 et sont aptes à contrôler le déplacement du noeud central d'articulation 30 vers l'arrière de la poussette lorsque les poussoirs 7, 8 sont basculés vers l'avant pour amorcer le pliage de la poussette. Les extrémités supérieures des bielles de synchronisation 26, 27 sont montées à rotation par rapport aux extrémités inférieures des poussoirs 7, 8 et les extrémités inférieures des bielles de synchronisation 26, 27 sont montées à rotation par rapport aux biellettes 20, 21.

Toujours dans le but d'améliorer l'ergonomie et de simplifier les manipulations nécessaires au pliage/dépliage de la poussette, selon un aspect particulier de l'invention, des moyens de verrouillage (non représentés) du châssis sont prévus pour éviter le pliage intempestif de la poussette. Ils peuvent être conçus pour que le verrouillage soit automatique, en fin de dépliage.

Afin de permettre le pliage complet de la poussette, le déverrouillage, ou la libération, de ces moyens de verrouillage est obtenu en actionnant des moyens de commande (non représentés) qui peuvent être montés sur les poignées de guidage 12, 13, ou sur le compas 11, et qui peuvent être réalisés par exemple sous la forme de boutons poussoirs mobiles entre une position de repos et une positon de déverrouillage.

Comme mentionné auparavant, les bielles de synchronisation 26, 27 permettent d'obtenir la synchronisation des deux mouvements, à savoir le pliage des poussoirs vers l'avant avec le rapprochement des portions latérales droite et gauche.

Les figures 2A à 2G illustrent un mode de réalisation du pliage de la poussette qui s'effectue en une seule manoeuvre, la poussette étant dans une configuration dépliée sur la figure 2A et dans une configuration pliée sur la figure 2G.

L'amorce du pliage, c'est-à-dire le passage de la configuration illustrée par la figure 2A (poussette totalement dépliée) à celle illustrée par la figure 2B (pliage amorcé), est obtenu en repliant manuellement les poussoirs 7, 8 vers l'avant, autour des articulations 9 et 10, conformément à la direction indiquée par la flèche A.

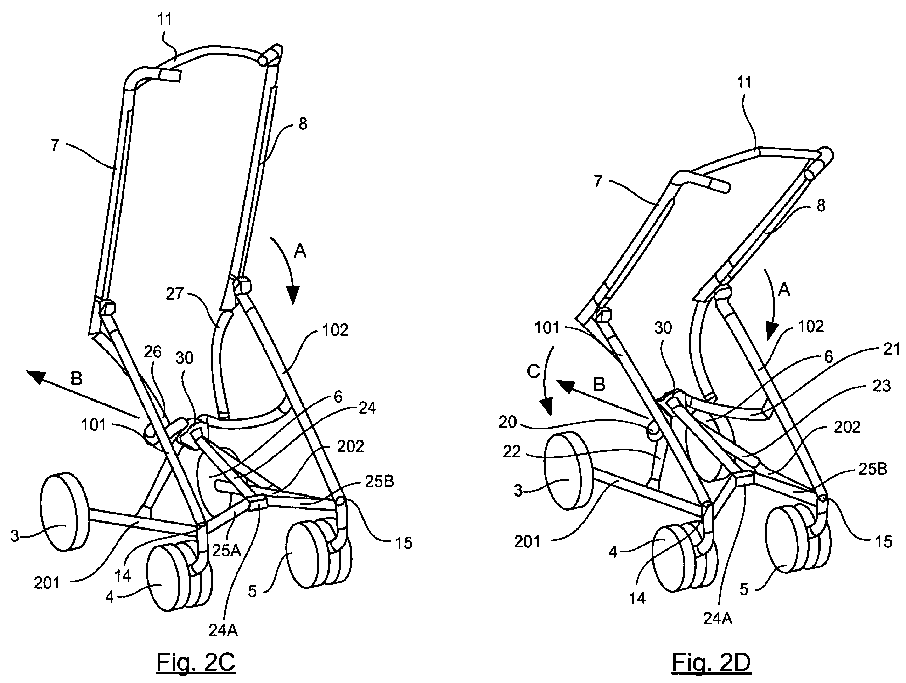

À mesure que les poussoirs 7, 8 sont repliés vers l'avant (figure 2B à figure 2G) par l'utilisateur et/ou par gravité (une assistance pouvant également être envisagée), le noeud central 30 se déplace vers les roues arrière 3, 6 sous l'effet des bielles de synchronisation 26, 27, selon la direction indiquée par la flèche B (figure 2C). Ce déplacement du noeud central 30 entraîne le déplacement du support pilote 24 selon la même direction B, et donc de l'élément d'articulation 24A située à son extrémité avant. En conséquence, les portions de traverse 25A, 25B de la traverse 25 se plient vers les roues arrière, et les montants droite (c'est-à-dire de la portion latérale droite) 101, 201 se rapprochent des montants gauche (c'est-à-dire de la portion latérale gauche) 102, 202 sous l'effet des biellettes 20, 21, 22, 23. Les poussoirs 7, 8 se rapprochent également l'un de l'autre une fois le pliage du compas 11 amorcé. Dans un souci de compacité, le compas 11 se plie de préférence vers l'intérieur de la poussette.

Une fois les poussoirs 7, 8 dans la configuration représentée sur la figure 2C, les montants supérieurs 101, 102 commencent à pivoter autour des articulations 14, 15 et se rapprochent des montants inférieurs 201, 202 selon la direction indiquée par la flèche C (figure 2D).

Comme illustré sur les figures 2E et 2F, le pliage s'effectue alors dans les trois directions, de manière fluide et ergonomique puisque l'utilisateur peut effectuer cette manoeuvre de pliage d'une seule manipulation en se tenant debout (sans se pencher). En particulier, les quatre biellettes 20, 21, 22, 23 se rassemblent autour du support pilote 24.

En position totalement pliée (figure 2G), les poussoirs 7, 8 de la poussette sont repliés sur les montants supérieurs 101, 102, qui sont eux-mêmes repliés sur les montants inférieurs 201, 202. Les roues 3, 4, 5, 6 touchent le sol et restent parallèles (du fait de la présence de parallélogrammes déformables) ce qui facilite le transport en traction de la poussette une fois celle-ci pliée.

Par ailleurs, une pédale peut être prévue à l'arrière du châssis, de manière à ce que l'utilisateur puisse redresser facilement la poussette pliée à l'aide du pied sans se pencher. Cette pédale peut en outre être configurée de manière à permettre la tenue debout et stable du châssis plié, une fois la poussette redressée, telle que représentée sur la figure 2H. En position redressée, la poussette repose sur les roues arrière 3, 6, la pédale n'étant pas représentée. Les extrémités des poussoirs 7 et 8 peuvent également jouer le rôle de cale de maintien en position redressée, ou position « debout », comme représenté sur la figure 2H.

Selon une première approche, une pédale de redressement peut être une pédale unique et centrale, placée par exemple dans le prolongement ou au voisinage du support pilote 24.

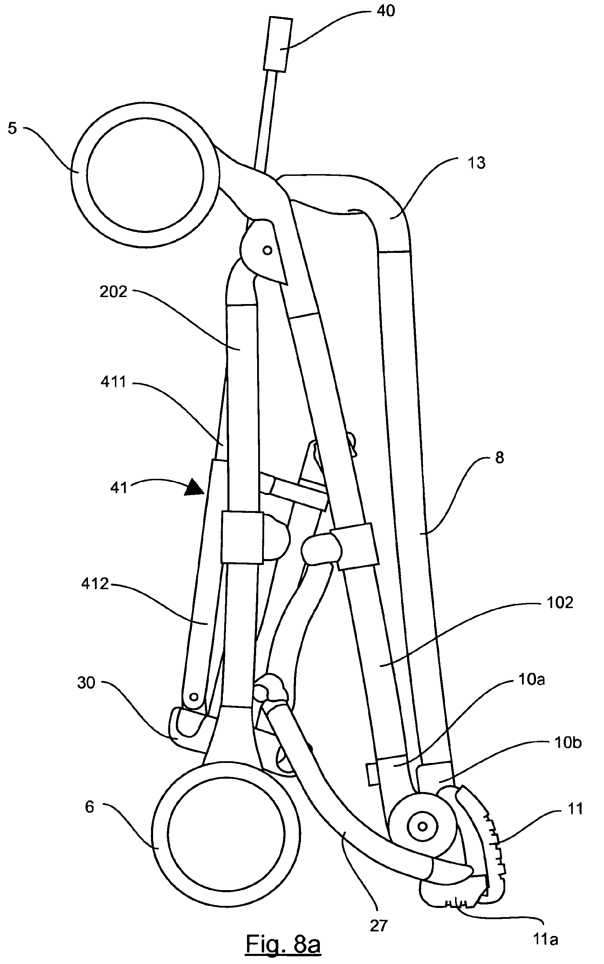

Dans un autre mode de réalisation, illustré sur les figures 8A à 8C, deux pédales de redressement sont prévues, sous la forme d'une pièce rapportée au niveau des articulations droite et gauche 9, 10. Bien sûr, une seule pédale, à droite ou à gauche, peut être prévue.

Plus précisément, les articulations (ou demi-noix) droite et gauche 9, 10 sont réalisées par exemple en plastique, et sont composées de deux parties articulées, à savoir une partie 9a (ou 10a respectivement) solidarisée à l'extrémité du montant supérieur 101 (ou respectivement 102) et une partie 9b (ou 10b respectivement) solidarisée à l'extrémité du poussoir 7 (ou 8 respectivement). La bielle de synchronisation 26, 27 peut être solidarisée à l'articulation 9, 10 respectivement, et plus précisément être articulée sur l'extrémité de l'articulation 9b, 10b respectivement. Une pédale de redressement 12 (ou 11 respectivement) est fixée ou formée sur cette deuxième partie 9b ou 10b.

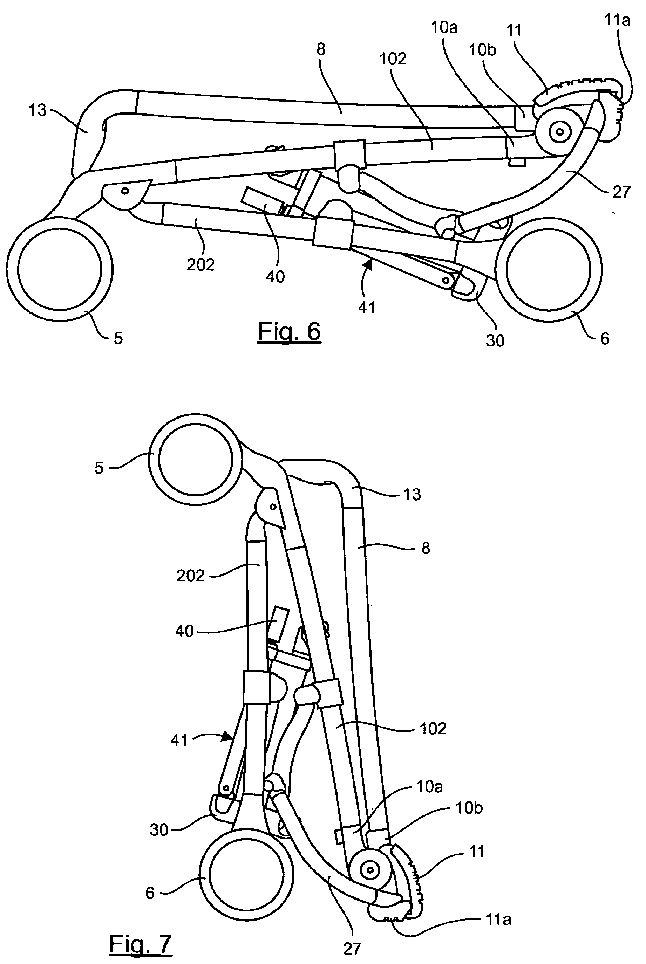

Dans le mode de réalisation des figures 6 à 13, la pédale 12, 11 épouse la forme de l'articulation 9, 10 (de l'extrémité du poussoir) respectivement mais d'autres formes de la pédale sont bien évidemment envisageables, en particulier une forme plus large.

La pédale présente une zone d'appui, destinée à recevoir le pied de l'utilisateur, qui s'étend sensiblement horizontalement, lorsque la poussette est pliée et repose à plat sur le sol. On comprend qu'un appui du pied sur cette surface d'appui entraîne le redressement de la poussette, dans une position verticale. La forme et la position de la pédale peuvent bien sûr être adaptées en fonction des caractéristiques de la poussette, de façon que l'action sur la pédale commande le redressement sans effort trop important, et sans fort risque de chute ou de basculement.

Dans le mode de réalisation illustré, la pédale est formée dans la masse de la partie 9b ou 10b, par exemple lors du moulage. Dans une alternative non représentée, chaque pédale de redressement peut être rapportée sur les parties 9b, 10b respectivement, et solidarisée par exemple par emboîtage, clipsage, collage, vissage, rivetage, surmoulage, ...

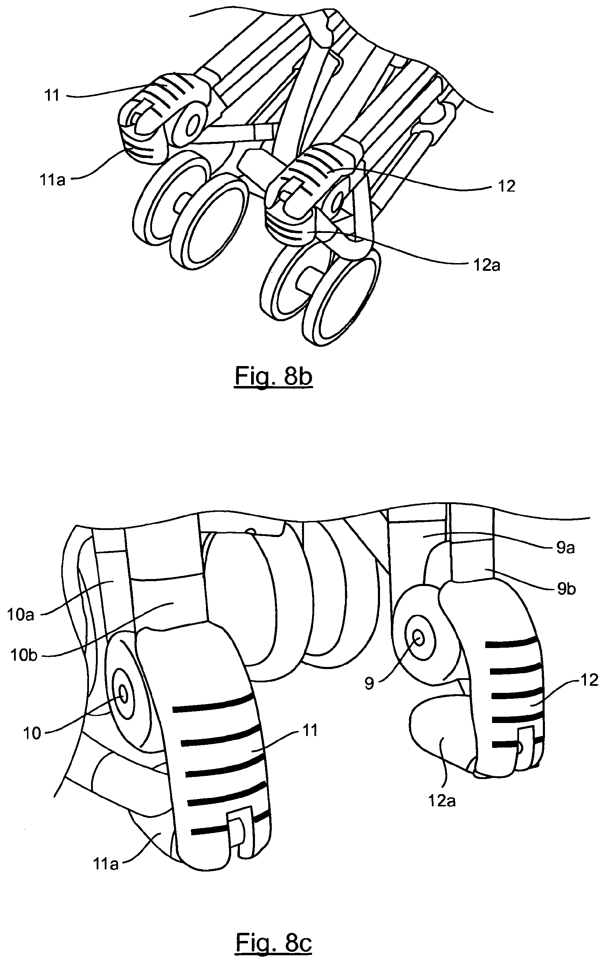

La pédale de redressement 11, 12 joue également avantageusement un rôle de stabilisation, ou de maintien, de la poussette en position redressée par le biais de cales 11a, 12a représentées sur la figure 8C, s'étendant sensiblement perpendiculairement à la zone d'appui, qui définissent une surface de contact avec le sol, formant pied, et permettant de maintenir la poussette debout (tenue debout).

Cette pédale de redressement est bien adaptée à la poussette telle que décrite précédemment. Cependant, le principe de cette pédale n'est pas limité au mode de réalisation décrit ci-dessus, mais peut s'appliquer plus généralement à d'autres types de poussettes ou voitures d'enfant que l'on souhaiterait mettre en position redressée, équipée de trois ou quatre roues par exemple, quel que soit le type de pliage mis en oeuvre (par exemple un pliage compact).

Le transport de la poussette en position pliée est parfois peu aisé. En effet, l'utilisateur peut choisir de soulever la poussette pliée et de la déplacer telle quelle ou en utilisant, par exemple, un sac de transport. Cela entraîne toutefois une fatigue importante du porteur qui doit supporter un poids conséquent, en particulier au niveau de ses bras, surtout quand la poussette est transportée dans cette configuration sur de grandes distances.

L'utilisateur peut éventuellement choisir d'incliner la poussette redressée (figure 2H) et de la pousser ou de la tirer en la faisant rouler sur les roues arrière 3, 6. Cela engendre toutefois des problèmes de stabilité et s'avère peu pratique, en particulier lorsque les roues avant 4, 5 sont sales et/ou humides.

Il serait donc souhaitable de proposer un châssis de poussette qui facilite les manipulations et les déplacements, lorsque la poussette est pliée.

On peut ainsi prévoir sur le châssis une poignée de traction 40 qui est reliée, par exemple, au noeud 30 ou au support pilote 24 ou à la traverse 25 ou au compas 11 ou aux poussoirs 7, 8.

Dans le mode de réalisation illustré sur les figures 6 à 13, la poignée de traction 40 est montée sur une tige 41 qui est reliée au noeud 30 et qui est au moins partiellement escamotable, par exemple, parallèlement au support pilote 24 ou à l'intérieur du support pilote 24. L'utilisateur peut ainsi déployer la poignée 40 pour tirer ou pousser la poussette pliée.

Dans le mode de réalisation illustré, la tige 41 est un ensemble télescopique, qui comprend une partie mâle 411 mobile, pouvant se déplacer en coulissement à l'intérieur d'une partie femelle 412, qui peut être fixe par rapport au châssis. L'ensemble télescopique peut bien sûr être formé de plus de deux parties mobiles les unes par rapport aux autres.

Selon une autre approche, la poignée de traction 40 peut prendre deux positions : une première position, dite de portage, où elle sert de poignée de portage (la poussette, pliée, n'étant plus en contact avec le sol) et une deuxième position, dite de traction, où elle sert de poignée de traction (la poussette, pliée, roulant sur le sol). Pour chaque position, des moyens de verrouillage adaptés peuvent être envisagés.

La tige 41 peut être télescopique, avec une partie mâle mobile 411 pouvant coulisser dans une partie femelle fixe 412. Elle porte la poignée 40 et peut être montée parallèle au support pilote 24. Dans une alternative, la tige 41 peut être insérée dans le support pilote 24, la partie femelle fixe 412 pouvant alors être constituée par le support pilote 24.

Dans un mode de réalisation particulier, la position de portage peut être obtenue quand la partie mâle 411 est insérée dans la partie femelle 412 et la position traction quand la partie mâle 411 est extraite de la partie femelle 412.

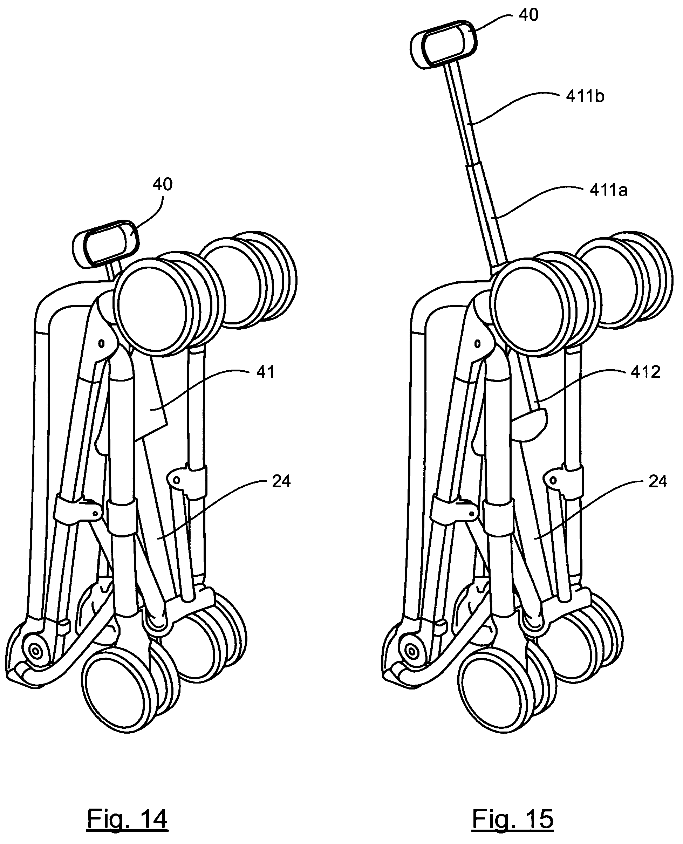

Dans un autre mode de réalisation illustré sur les figures 14 et 15, la position de portage est obtenue en faisant coulisser le sous-ensemble télescopique 41, ou tige, par rapport au support pilote 24, le sous-ensemble 41 restant verrouillé ou restant en butée sur le support pilote 24 (figure 14). Un verrouillage ou un point dur suffisant peut être prévu pour maintenir le sous-ensemble télescopique 41, ou tige, en position « rentrée » lors du roulage (poussette ouverte). On pourra alternativement mettre en oeuvre un système de rappel du type sandow par exemple.

La position de traction (figure 15) est obtenue en déverrouillant le sous-ensemble télescopique 41. Dans ce cas, le sous-ensemble télescopique 41 coulisse par rapport au support pilote 24, puis il est déverrouillé, le dépliage télescopique pouvant alors être amorcé. En d'autres termes, les parties mobiles 411a, 411b peuvent être extraites de la partie 412.

La poignée 40 peut être articulée et se verrouiller sur le châssis, sur l'élément d'articulation 24A ou sur le support pilote 24 par exemple.

Dans une alternative, la poignée 40 est montée fixe sur l'élément d'articulation 24A ou sur le support pilote 24 par exemple, et est munie d'un clip de verrouillage.

Le coulissement du sous-ensemble télescopique 41, ou tige, par rapport au support pilote 24 et le dépliage télescopique du sous-ensemble 41 peuvent être amorcé en activant des moyens de déverrouillage qui peuvent être réalisés, par exemple, sous la forme d'au moins un bouton poussoir mobile entre une position de repos et une positon de déverrouillage situé à proximité de la poignée 40 et une tringlerie agissant sur des pions de verrouillage.

Selon encore une autre approche, la tige 41 peut être articulée, par exemple parallèlement au support pilote 24.

Des moyens spécifiques peuvent être prévus, pour maintenir la poignée 40 dans la position repliée et/ou dans la position déployée. On peut également prévoir des moyens de rappel, tendant à ramener la poignée 40 dans la position repliée, lorsque aucune traction n'est appliquée sur la poignée 40.

Cette poignée 40 peut être articulée par rapport à la tige, pour rendre l'utilisation et/ou l'escamotage plus aisés.

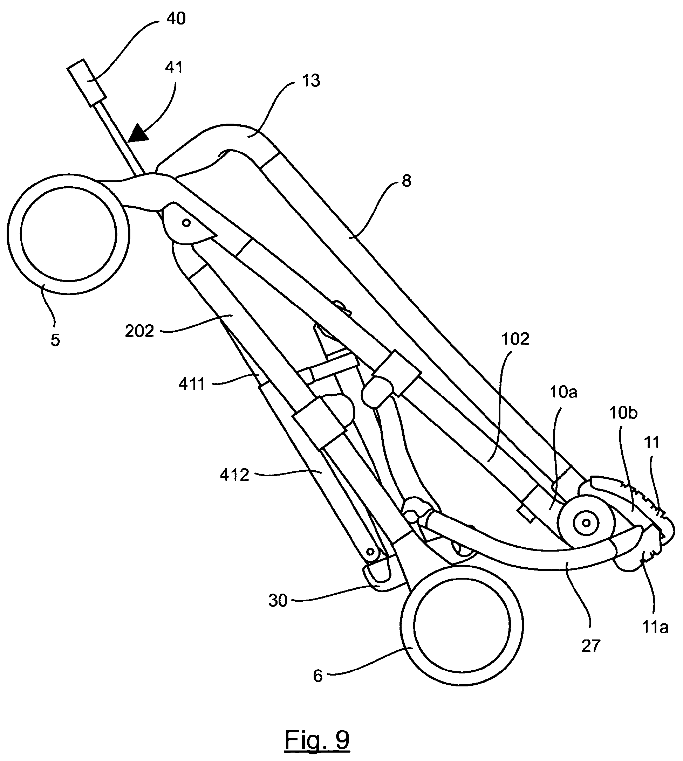

On a représenté sur la figure 6 une vue de côté de la poussette pliée à plat, la poignée de traction 40 étant en position escamotée. Le transport de la poussette pliée s'effectue en redressant la poussette, comme illustré sur la figure 7, de manière à ce qu'elle repose sur les roues arrière 3, 6, et en déployant la poignée de traction 40 (figure 8). En utilisant la poignée de traction 40 déployée, la poussette pliée peut alors être déplacée en la faisant rouler sur les roues arrière 3, 6 (figure 9).

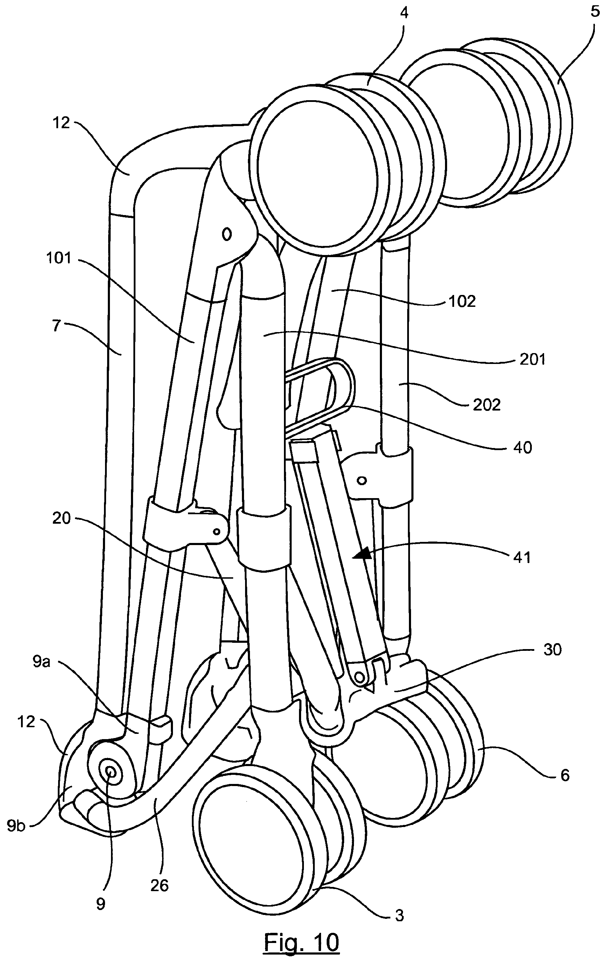

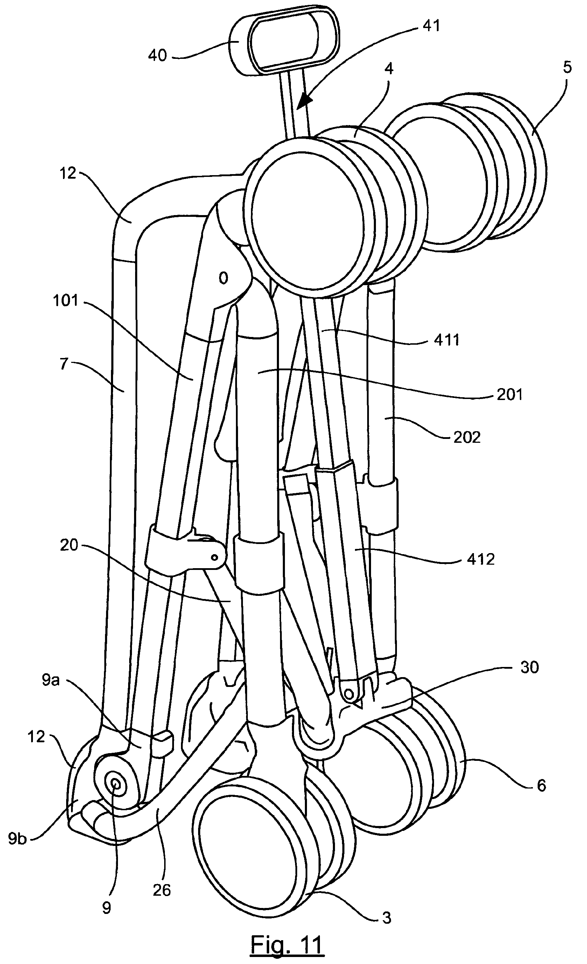

Les figures 10 et 11 sont des vues en perspective de la poussette pliée en position relevée, la poignée de traction 40 étant respectivement escamotée et déployée sur ces figures. On distingue en outre la tige 41 qui est reliée au noeud 30 et qui est au moins partiellement escamotable, la partie mâle 411 mobile, pouvant se déplacer en coulissement à l'intérieur de la partie femelle 412.

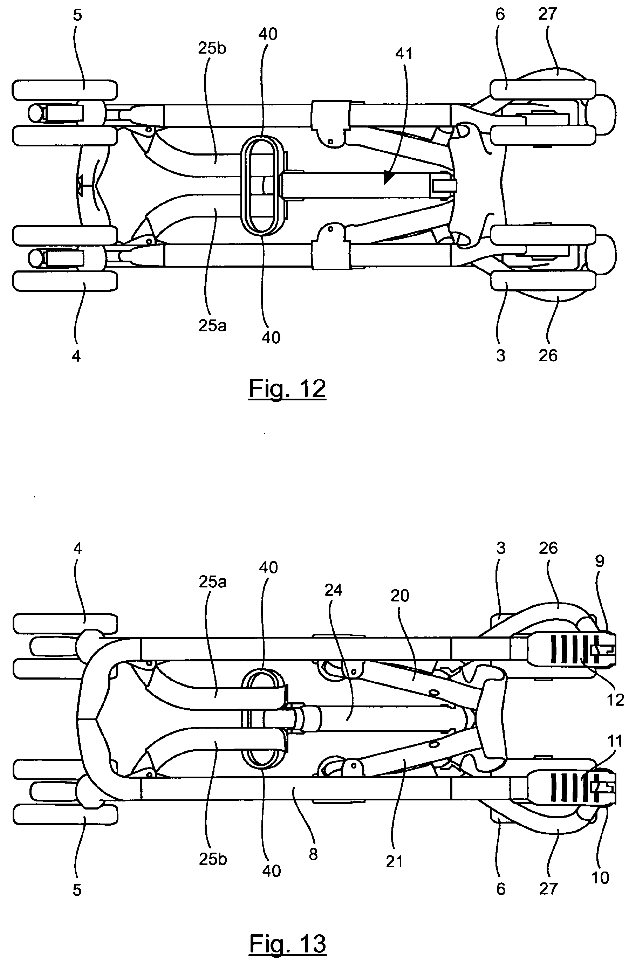

La figure 12 est une vue de dessous de la poussette montrant la poignée de traction 40 en position escamotée et la tige 41. La figure 13 est une vue de dessus de la poussette pliée sur laquelle on distingue également la poignée de traction 40 en position escamotée.

Avantageusement, la poignée de traction 40 et la tige 41, comprenant la partie mâle 411 et la partie femelle 412, sont réalisées en aluminium et/ou en plastique par exemple, ou tout autre matériau qui combine légèreté et solidité.

La forme de la poignée n'est pas limitée à celle représentée sur les figures 6 à 13.

Une telle poignée offre un confort supplémentaire à l'utilisateur et facilite le transport de la poussette lorsque celle-ci est en position pliée. Une telle poignée est en outre simple à réaliser et à mettre en oeuvre, solide et sure, et facile à manipuler. Une telle poignée n'entrave pas non plus le pliage de la poussette.

Cette poignée escamotable est bien adaptée à la poussette telle que décrite précédemment. Cependant, le principe de cette poignée de traction escamotable n'est pas limité au mode de réalisation décrit ci-dessus, mais peut s'appliquer plus généralement à d'autres types de poussettes ou voitures d'enfant, équipée de trois ou quatre roues par exemple, quel que soit le type de pliage mis en oeuvre (par exemple un pliage compact).

Selon la technique de l'invention, on obtient donc une cinématique de pliage se décomposant essentiellement de la manière suivante :
- les moyens de verrouillage sont déverrouillés à l'aide des moyens de commande présents sur au moins une des poignées de guidage reliées aux poussoirs ou sur le compas reliant les poussoirs ou sur les poussoirs;
- le pliage est amorcé en cassant les poussoirs vers l'avant de la poussette;
- les bielles de synchronisation entraînent alors le support pilote qui amorce le pliage de la poussette dans les trois directions;
- le pliage complet de la poussette est effectué.

Lors du dépliage, on fait pivoter inversement les poussoirs vers l'arrière de la poussette.

Bien entendu, des variantes de l'invention peuvent être envisagées.

Notamment, les bielles de synchronisation, les quatre biellettes, le support pilote et le noeud central d'articulation peuvent avoir des formes différentes de celles illustrées.

Par ailleurs, pour des raisons de confort et de maniabilité, on peut prévoir de rendre réglable la position des poignées de guidage.

Selon une variante de l'invention, les deux roues avant peuvent être remplacées par une roue centrale (ou un bloc de roues central). Dans ce cas, cette roue centrale peut être montée sur l'élément d'articulation 24A, ou au voisinage de celui-ci. La structure du châssis et sa cinématique restent inchangées.

## Revendications

1. Châssis pliant de poussette pour enfant, comprenant deux portions latérales (1, 2) de châssis présentant chacune un montant supérieur (101, 102) et un montant inférieur (201, 202) montés articulés l'un par rapport à l'autre entre une position dépliée et une position pliée, les montants inférieurs (201, 202) étant reliés par une extrémité arrière à une roue ou un bloc de roues arrière (3,6), chacun desdits montants supérieurs (102, 102) étant couplés, par une extrémité arrière, à un poussoir (7, 8) et, par une extrémité avant, à un desdits montants inférieurs, ledit châssis comprenant en outre un noeud central d'articulation (30) relié par quatre biellettes (20, 21, 22, 23) respectivement à chacun desdits montants, de façon à assurer leur rapprochement ou leur éloignement lors du pliage et du dépliage respectivement, comprenant un support pilote (24) reliant ledit noeud central d'articulation (30) à une traverse (25) formant compas reliant les extrémités avant desdits montants inférieurs (201, 202) et/ou desdits montants supérieurs (101, 102) desdites portions latérales de châssis, ledit noeud central d'articulation (30) ayant une position fixe par rapport au support pilote (24), **caractérisé en ce que**:
ladite traverse (25) formant compas comprend deux portions de traverse gauche et droite (25A, 25B), chacune desdites portions de traverse présentant une première extrémité couplée de façon pivotante à une extrémité avant (24A) dudit support pilote (24) et une seconde extrémité est couplée de façon pivotante à l'extrémité avant d'un desdits montants inférieurs (201, 202) et/ou d'un desdits montants supérieurs (101, 102), lesdites portions de traverse étant aptes à se plier vers l'arrière de la poussette lors du pliage dudit châssis.

2. Châssis selon la revendication 1, **caractérisé en ce qu'**il comprend des moyens de contrôle du pliage et/ou du dépliage (26, 27) solidaires desdits poussoirs et agissant sur ledit noeud central d'articulation (30), au moins pour amorcer le pliage et/ou le dépliage dudit châssis.

3. Châssis selon l'une quelconque des revendications 1 et 2, **caractérisé en ce que** lesdits montants supérieurs (101, 102) sont articulés par rapport auxdits poussoirs (7, 8), et **en ce que** lesdits moyens de contrôle (26, 27) comprennent au moins une bielle dite de synchronisation entraînant ledit noeud central d'articulation (30) vers l'arrière de la poussette lorsque lesdits poussoirs sont basculés vers l'avant.

4. Châssis selon l'une quelconque des revendications 1 à 3, **caractérisé en ce qu'**il comprend des moyens de verrouillage du châssis en position dépliée.

5. Châssis selon la revendication 4, **caractérisé en ce qu'**il comprend des moyens de commande desdits moyens de verrouillage, montés sur lesdits poussoirs (7, 8) ou sur des poignées de guidage (12, 13) reliées auxdits poussoirs ou sur un compas reliant lesdits poussoirs (7, 8).

6. Châssis selon l'une quelconque des revendications 1 à 5, **caractérisé en ce qu'**il comprend des moyens de traction de ladite poussette en position pliée, reliés audit central d'articulation (30) ou au support pilote (24) ou à la traverse (25)

7. Châssis selon la revendication 6 , **caractérisé en ce que** lesdits moyens de traction comprennent une poignée montée sur une tige au moins partiellement escamotable parallèlement audit et/ou dans ledit support pilote (24) .

8. Châssis selon l'une quelconque des revendications précédentes, **caractérisé en ce qu'**il comprend au moins une pédale (11, 12) permettant de redresser ladite poussette une fois celle-ci en position pliée.

9. Châssis selon la revendication 8 , **caractérisé en ce que** ladite pédale (11, 12) comprend ou coopère avec des moyens de stabilisation de la poussette une fois celle-ci en position pliée et relevée.

10. Châssis selon l'une quelconque des revendications 8 et 9, **caractérisé en ce qu'**il comprend deux pédales (11, 12) formées dans ou montées sur les articulations reliant respectivement un desdits montants supérieurs et un desdits poussoirs (7, 8).

11. Châssis selon l'une quelconque des revendications précédentes,**caractérisé en ce que** l'extrémité avant de chacun desdits montants inférieurs est reliée à au moins une roue ou un bloc de roues avant (4, 5).

12. Poussette pour enfant comprenant un châssis pliant selon l'une quelconque des revendications 1 à 11 et au moins un dispositif de transport d'enfant monté sur ledit châssis.

## Patentansprüche

1. Faltbarer Kinderwagenrahmen mit zwei Seitenteilen (1, 2), die jeweils eine obere Stange (101, 102) und eine untere Stange (201, 202) aufweisen, welche gelenkig im Verhältnis zueinander zwischen einer entfalteten Position und einer gefalteten Position angebracht sind,
wobei die unteren Stangen (201, 202) über das rückwärtige Ende mit einem Hinterrad oder einem Hinterradblock (3, 6) verbunden sind,
und wobei die besagten oberen Stangen (101, 102) jeweils über das hintere Ende mit einem Drücker (7, 8) und über das vordere Ende mit einer der unteren Stangen gekoppelt sind, wobei der besagte Rahmen darüber hinaus einen zentralen Gelenkknotenpunkt (30) aufweist, der jeweils über vier kleine Stangen (20, 21, 22, 23) mit jeder der vier besagten Stangen verbunden ist, um sicherzustellen, dass sie beim Falten bzw. beim Entfalten zusammenrücken bzw. auseinandergetrieben werden,
wobei der Rahmen eine Steuerstange (24) aufweist, die den besagten zentralen Gelenkknotenpunkt (30) mit einer Querstange (25) verbindet, welche ein Kniegelenk bildet, das die vorderen Enden der besagten unteren Stangen (201, 202) und/oder der besagten oberen Stangen (101, 102) der besagten Seitenteile des Rahmens verbindet, wobei der besagte zentrale Gelenkknotenpunkt (30) eine feste Position im Verhältnis zur Steuerstange (24) einnimmt,
**dadurch gekennzeichnet, dass**:
die besagte Querstange (25), die ein Kniegelenk bildet, zwei Teile der jeweils linken und rechten Stange (25A, 25B) umfasst, wobei jeder besagte Teil der Querstange ein erstes Ende aufweist, dass drehbar mit dem vorderen Ende (24A) der besagten Steuerstange (24) gekoppelt ist, während das zweite Ende drehbar mit dem vorderen Ende einer der besagten unteren Stangen (201, 202) und/oder einer der besagten oberen Stangen (101, 102) verbunden ist, wobei die besagten Querstangenteile so ausgelegt sind, dass sie beim Falten des besagten Rahmens zum hinteren Teil des Kinderwagens hin gefaltet zu werden.

2. Rahmen nach Anspruch 1, **dadurch gekennzeichnet, dass** er über Mittel zum Steuern des Faltens und/oder Entfaltens (26, 27) verfügt, die mit den besagten Drückern verbunden sind und auf den besagten zentralen Gelenkknotenpunkt (30) einwirken, zumindest um das Falten und/oder Entfalten des besagten Rahmens in Gang zu setzen.

3. Rahmen nach einem der Ansprüche 1 oder 2, **dadurch gekennzeichnet, dass** die besagten oberen Stangen (101, 102) im Verhältnis zu den besagten Drückern (7, 8) gelenkig angebracht sind und,
dass die besagten Steuermittel (26, 27) mindestens eine sogenannte Synchronisierungsschubstange aufweisen, die den besagten zentralen Gelenkknotenpunkt (30) zum hinteren Teil des Kinderwagens lenkt, wenn die besagten Drücker nach vorne geschwenkt werden.

4. Rahmen nach einem der Ansprüche 1 bis 3, **dadurch gekennzeichnet, dass** er über Mittel zum Verriegeln des Rahmens in der entfalteten Position verfügt.

5. Rahmen nach Anspruch 4, **dadurch gekennzeichnet, dass** er über Mittel zum Steuern der besagten Mittel zum Verriegeln verfügt, die auf die besagten Drücker (7, 8) oder auf mit den besagten Drückern verbundenen Lenkhandgriffen (12, 13) oder auf ein Kniegelenk angebracht sind, welches die zwei Drücker (7, 8) miteinander verbindet.

6. Rahmen nach einem der Ansprüche 1 bis 5, **dadurch gekennzeichnet, dass** er über Mittel zum Ziehen des besagten Kinderwagens in der gefalteten Position verfügt, die mit dem besagten zentralen Gelenkknotenpunkt (30) oder mit der Steuerstange (24) oder mit der Querstange (25) verbunden sind.

7. Rahmen nach Anspruch 6, **dadurch gekennzeichnet, dass** die besagten Zugmittel einen Handgriff umfassen, der auf einem zumindest teilweise einziehbaren Stiel parallel zur und/oder innerhalb der besagten Steuerstange (24) angebracht ist.

8. Rahmen nach einem der vorhergehenden Ansprüche, **dadurch gekennzeichnet, dass** er mindestens einen Fußhebel (11, 12) aufweist, mit dem der besagte Kinderwagen aufgerichtet werden kann, wenn dieser sich in der gefalteten Position befindet.

9. Rahmen nach Anspruch 8, **dadurch gekennzeichnet, dass** der besagte Fußhebel (11, 12) über Mittel zum Stabilisieren des Kinderwagens wenn dieser sich in der gefalteten und aufgerichteten Position befindet verfügt, oder mit solchen Mitteln zusammenwirkt.

10. Rahmen nach einem der Ansprüche 8 oder 9, **dadurch gekennzeichnet, dass** er über zwei Fußhebel (11, 12) verfügt, die in den Gelenken ausgebildet oder angebracht sind, die eine der besagten oberen Stangen bzw. eines der besagten Drücker (7, 8) verbinden.

11. Rahmen nach einem der vorhergehenden Ansprüche, **dadurch gekennzeichnet, dass** das vordere Ende einer jeden der besagten unteren Stangen mit mindestens einem Vorderrad oder einem Vorderradblock (4, 5) verbunden ist.

12. Kinderwagen, der einen faltbaren Rahmen nach einem der Ansprüche 1 bis 11 und mindestens eine Vorrichtung zum Befördern eines Kindes aufweist, die auf dem besagten Rahmen angebracht ist.

## Claims

1. Folding frame for a child's pushchair, comprising two side frame sections (1, 2) each having an upper member (101, 102) and a lower member (201, 202) mounted so as to articulate relative to each other between an unfolded position and a folded position, said lower members (201, 202) being linked, via a rear end, to a rear wheel or to a set of rear wheels (3, 6), each of said upper members (101, 102) being coupled, via a rear end, to a pusher (7, 8) and, via a front end, to one of said lower members, said frame further comprising a central articulation point (30) linked via four link rods (20, 21, 22, 23) to each of said members, respectively, so as to bring them together or separate them during folding or unfolding, respectively, comprising a guide support (24) linking said central articulation point (30) to a cross-member (25) forming a strut linking the front ends of said lower members (201, 202) and/or of said upper members (101, 102) of said side frame sections, said central articulation point (30) having a position that is fixed relative to said guide support (24), **characterised in that**:
said cross-member (25) forming a strut comprises two left-hand and right-hand cross-member sections (25A, 25B), each of said cross-member sections having a first end pivotally coupled to a front end (24A) of said guide support (24) and a second end pivotally coupled to the front end of one of said lower members (201, 202) and/or to one of said upper members (101, 102), said cross-member sections being capable of folding towards the rear of said pushchair when said frame is folded.

2. Frame according to claim 1, **characterised in that** it comprises means (26, 27) for controlling folding and/or unfolding that are rigidly connected to said pushers and act upon said central articulation point (30), at least to initiate the folding and/or the unfolding of said frame.

3. Frame according to any one of claims 1 to 2, **characterised in that** said upper members (101, 102) are articulated relative to said pushers (7, 8), and **in that** said control means (26, 27) comprise at least one connecting rod, called synchronisation rod, that drives said central articulation point (30) towards the rear of said pushchair when said pushers are tilted forwards.

4. Frame according to any one of claims 1 to 3, **characterised in that** it comprises means for locking said frame in the unfolded position.

5. Frame according to claim 4, **characterised in that** it comprises means for controlling said locking means that are mounted on said pushers (7, 8) or on guiding handles (12, 13) linked to said pushers or on a strut linking said pushers (7, 8).

6. Frame according to any one of claims 1 to 5, **characterised in that** it comprises means for pulling said pushchair in the folded position, said means being linked to said central articulation point (30) or to said guide support (24) or to said cross-member (25).

7. Frame according to claim 6, **characterised in that** said traction means comprise a handle mounted on a shaft that can be at least partially stowed parallel to and/or inside said guide support (24).

8. Frame according to any one of the preceding claims, **characterised in that** it comprises at least one pedal (11, 12) allowing said pushchair to be redressed once it is in the folded position.

9. Frame according to claim 8, **characterised in that** said pedal (11, 12) comprises or cooperates with means for stabilising said pushchair once said pushchair is in the folded and raised position.

10. Frame according to any one of claims 8 to 9, **characterised in that** it comprises two pedals (11, 12) that are formed in or mounted on the articulations that respectively link one of said upper members and one of said pushers (7, 8).

11. Frame according to any one of the preceding claims, **characterised in that** the front end of each of said lower members is linked to at least one front wheel or to one set of front wheels (4, 5).

12. Child's pushchair comprising a foldable frame according to any one of claims 1 to 11 and at least one child carrying device mounted to said frame.
